# EUROPÄISCHE PATENTANMELDUNG

(11) **EP 4 299 947 A1**
(43) Veröffentlichungstag der Anmeldung: **03.01.2024**
(21) Anmeldenummer: 23180994.8
(22) Anmeldetag: 22.06.2023
(51) Int. Cl.: F16F 13/14

(54) **FLUIDISCHE KOPPELVORRICHTUNG UND FAHRWERK**

(30) Priorität: 28.06.2022 AT 504722022
(71) Anmelder: Siemens Mobility Austria GmbH, 1210 Wien (AT)
(72) Erfinder: Maier, Hartmut, 8010 Graz (AT); Moser, Christian, 8042 Graz (AT)
(74) Vertreter: Siemens Patent Attorneys

(57) **Zusammenfassung**

Die Erfindung betrifft eine fluidische Koppelvorrichtung zur Kopplung von Bauteilen, insbesondere für eine Radführungsvorrichtung oder Radsatzführungsvorrichtung für ein Fahrwerk für ein Schienenfahrzeug, mit einem Kern (3), mit einem den Kern (3) umgebenden Gehäuse (4) und mit zumindest einer ersten Fluidkammer (5), welche zur Einstellung von Koppelsteifigkeiten der Koppelvorrichtung mit Fluid versorgbar ist, wobei die zumindest erste Fluidkammer (5) als erster Hohlraum zwischen dem Gehäuse (4) und dem Kern (3) gebildet ist.

Es wird vorgeschlagen, dass die zumindest erste Fluidkammer (5) mittels eines verformbaren ersten Balgs (9), welcher mit dem Gehäuse (4) und mit dem Kern (3) verbunden ist, fluiddicht verschlossen ist, wobei zumindest der erste Balg (9) rotationssymmetrisch bezüglich einer Balgachse (11), welche rechtwinklig zu einer Längsachse (12) der Koppelvorrichtung ausgerichtet ist, ausgeführt ist.

Dadurch weisen Komponenten der Koppelvorrichtung eine leichtgängige Relativbeweglichkeit auf, ohne dass der erste Balg (9) übermäßig stark abgenutzt wird.

## Beschreibung

Die Erfindung bezieht sich auf eine fluidische Koppelvorrichtung zur Kopplung von Bauteilen, insbesondere für eine Radführungsvorrichtung oder Radsatzführungsvorrichtung für ein Fahrwerk für ein Schienenfahrzeug, mit einem Kern, mit einem den Kern umgebenden Gehäuse und mit zumindest einer ersten Fluidkammer, welche zur Einstellung von Koppelsteifigkeiten der Koppelvorrichtung mit Fluid versorgbar ist, wobei die zumindest erste Fluidkammer als erster Hohlraum zwischen dem Gehäuse und dem Kern gebildet ist.

In vielen maschinenbaulichen Anwendungen ist eine Einstellung von Koppelsteifigkeiten zwischen miteinander zu koppelnden Bauteilen wünschenswert oder sogar erforderlich. Ein mögliches Anwendungsgebiet für Koppelvorrichtungen mit einstellbaren Koppelsteifigkeiten sind beispielsweise Radführungsvorrichtungen bzw. Radsatzführungsvorrichtungen von Fahrwerken von Schienenfahrzeugen. Mit Radführungsvorrichtungen bzw. Radsatzführungsvorrichtungen werden Radsätze oder Einzelräder von Fahrwerken an eine Tragestruktur (z.B. einen Fahrwerksrahmen) gekoppelt. In Radführungsvorrichtungen bzw. Radsatzführungsvorrichtungen können beispielsweise hydraulische Buchsen eingesetzt sein, welche Radführungssteifigkeiten bzw. Radsatzführungssteifigkeiten je nach Bedarf einstellen bzw. variieren. Zur Verschleiß- und Geräuschreduktion wird dabei oft in Gleisbögen eine geringe Radführungssteifigkeit bzw. Radsatzführungssteifigkeit angestrebt, auf geraden Gleisabschnitten zur Laufstabilitätserhöhung eine hohe Radführungssteifigkeit bzw. Radsatzführungssteifigkeit.

Aus dem Stand der Technik ist beispielsweise die WO 2014/154315 A1 bekannt, in welcher ein fluidisches Lager mit einem Kern und einer den Kern ummantelnden Hülle offenbart ist. Zwischen dem Kern und der Hülle sind zwei Fluidkammern angeordnet, welche von Elastomerelementen begrenzt und durch einen Fluidkanal miteinander verbunden sind. Der Kern ist über die Elastomerelemente gegen die Hülle abgestützt. Weiterhin ist eine Ausgleichskammer angeordnet, aus welcher Fluid in die beiden Fluidkammern eingeleitet werden kann.

Weiterhin offenbart die WO 2017/157740 A1 eine zur Rad- bzw. Radsatzsteuerung eingesetzte Koppelvorrichtung. Es sind eine Aktuatoreinheit und ein Elastiklager gezeigt, welche in wirkungsmäßiger Parallelschaltung zueinander angeordnet sind und über welche ein Rad bzw. ein Radatz mit einem Fahrwerksrahmen gekoppelt ist. Das Elastiklager kann als hydraulisches Lager ausgeführt sein.

Ferner ist in der EP 3 978 330 A1 ein Elastikelement mit einem ein Durchgangsloch aufweisenden Führungskörper und zwei relativ zu dem Führungskörper verschieblichen Hohlkörpern beschrieben, wobei aus dem Durchgangsloch, aus dem Führungskörper selbst sowie aus Innenräumen der Hohlkörper eine Fluidkammer gebildet ist. Das Elastikelement weist Federvorrichtungen auf, deren Längsachsen rechtwinklig zueinander ausgerichtet sind.

Der Erfindung liegt die Aufgabe zugrunde, eine gegenüber dem Stand der Technik weiterentwickelte, fluidische Koppelvorrichtung mit erhöhter Verschleißresistenz anzugeben, deren Kern und deren Gehäuse ohne übermäßige Widerstände relativ zueinander beweglich sind.

Erfindungsgemäß wird diese Aufgabe gelöst mit einer fluidischen Koppelvorrichtung nach Anspruch 1, bei der die zumindest erste Fluidkammer mittels eines verformbaren ersten Balgs, welcher mit dem Gehäuse und mit dem Kern verbunden ist, fluiddicht verschlossen ist, wobei zumindest der erste Balg rotationssymmetrisch bezüglich einer Balgachse, welche rechtwinklig zu einer Längsachse der Koppelvorrichtung ausgerichtet ist, ausgeführt ist.

Dadurch wird eine lange Lebensdauer der erfindungsgemäßen Koppelvorrichtung bei leichtgängiger Relativbeweglichkeit ihrer Komponenten ermöglicht. Die erfindungsgemäße Koppelvorrichtung kann beispielsweise in einer Radführungsvorrichtung oder Radsatzführungsvorrichtung eines Schienenfahrzeugs eingesetzt sein. Dabei ermöglicht die erfindungsgemäße Koppelvorrichtung eine Reduktion von Verschleiß in Rad-Schiene-Kontakten, da die Koppelvorrichtung bei deren Versorgung mit Fluid (z.B. mit einem Hydraulikfluid) eine frequenzabhängige Steifigkeit für eine Kopplung von Bauteilen aufweist. Dadurch kann eine Radführungssteifigkeit der Radführungsvorrichtung oder eine Radsatzführungssteifigkeit der Radsatzführungsvorrichtung bei geringen Fahrgeschwindigkeiten bzw. geringer Anregung (z.B. bei Fahrten durch Gleisbögen) einen kleinen Wert und bei hohen Fahrgeschwindigkeiten bzw. hohen Anregungsfrequenzen (z.B. bei Fahrten mit Sinuslauf auf Geraden) einen großen Wert aufweisen.

Der erste Balg, welcher eine geringe Schichtdicke aufweisen kann, behindert aufgrund seiner Verformbarkeit Relativbewegungen zwischen dem Kern und dem Gehäuse nicht oder nur unwesentlich, wodurch, wenn die erfindungsgemäße Koppelvorrichtung beispielsweise in der Radführungsvorrichtung oder der Radsatzführungsvorrichtung eingesetzt ist, Steifigkeiten der Radführungsvorrichtung oder der Radsatzführungsvorrichtung bedarfsgerecht eingestellt werden können. Statische Steifigkeiten im Inneren der Koppelvorrichtung, welche Einfluss auf die Relativbewegungen zwischen dem Kern und dem Gehäuse haben, werden durch den ersten Balg nicht wesentlich beeinflusst.

Der erste Balg folgt Relativbewegungen zwischen dem Kern und dem Gehäuse aufgrund seiner Verformung, wodurch beispielsweise verschleißfördernde Gleitvorgänge zwischen dem ersten Balg einerseits und dem Kern sowie dem Gehäuse andererseits vermieden werden.

Es wird durch diese Maßnahme ferner eine Einstellung von dynamischen, d.h. fluidischen Steifigkeiten in Richtung einer Querachse der Koppelvorrichtung ermöglicht.

Weitere vorteilhafte Ausgestaltungen der erfindungsgemäßen fluidischen Koppelvorrichtung ergeben sich aus den Unteransprüchen.

Ein Fluidtransfer innerhalb der Koppelvorrichtung wird ermöglicht, wenn eine zweite Fluidkammer als zweiter Hohlraum zwischen dem Gehäuse und dem Kern gebildet und mittels eines verformbaren zweiten Balgs, welcher mit dem Gehäuse und mit dem Kern verbunden ist, fluiddicht verschlossen ist, wobei durch den Kern eine erste Fluidleitung geführt ist, welche die erste Fluidkammer mit der zweiten Fluidkammer verbindet. Die erste Fluidleitung kann beispielsweise eine Drosselungsfunktion erfüllen, wodurch ein Strömungswiderstand eines beispielsweise in die Koppelvorrichtung eingefüllten Fluids beeinflusst werden kann.

Eine hohe Widerstandsfähigkeit des ersten Balgs selbst gegen Abnutzung wird erreicht, wenn zumindest der erste Balg als faserverstärkter Elastomerbalg ausgebildet ist.

Eine sichere Verbindung zwischen dem ersten Balg einerseits und dem Kern sowie dem Gehäuse andererseits wird erzielt, wenn zumindest der erste Balg in eine erste Gehäuseausnehmung des Gehäuses und in eine erste Kernausnehmung des Kerns eingefügt ist.

Der erste Balg kann beispielsweise in die erste Gehäuseausnehmung und in die erste Kernausnehmung eingeklemmt sein.

Eine Vorzugslösung erhält man, wenn das Gehäuse zumindest einen in die zumindest erste Fluidkammer hineinragenden ersten Anschlag für den Kern aufweist oder mit dem Gehäuse zumindest ein in die zumindest erste Fluidkammer hineinragender erster Anschlag für den Kern verbunden ist. Durch diese Maßnahme werden Relativbewegungen zwischen dem Kern und dem Gehäuse begrenzt.

Eine Einstellung von statischen Steifigkeiten im Inneren der Koppelvorrichtung, welche Relativbewegungen zwischen dem Kern und dem Gehäuse beeinflussen, wird ermöglicht, wenn zwischen dem Gehäuse und dem Kern zumindest eine erste Federvorrichtung angeordnet ist.

Eine hohe statische Steifigkeit der ersten Federvorrichtung insbesondere in Richtung einer Federlängsachse der ersten Federvorrichtung kann erreicht werden, wenn die zumindest erste Federvorrichtung als Schichtfeder ausgebildet ist.

Vorteilhafte Steifigkeitseigenschaften der Koppelvorrichtung erhält man, wenn die zumindest erste Fluidkammer auf einer ersten Querachse der Koppelvorrichtung angeordnet ist und die zumindest erste Federvorrichtung auf einer zweiten Querachse der Koppelvorrichtung angeordnet ist, wobei die erste Querachse und die zweite Querachse rechtwinklig zueinander ausgerichtet sind.

Durch diese Maßnahme wird eine Funktionentrennung der Koppelvorrichtung in Richtung der ersten Querachse und der zweiten Querachse erreicht. In Richtung der ersten Querachse können vorwiegend frequenzabhängig veränderliche Steifigkeiten vorliegen, in Richtung der zweiten Querachse statische Steifigkeiten. Die dynamischen Steifigkeiten in Richtung der ersten Querachse sind beispielsweise unabhängig von den statischen Steifigkeiten in Richtung der zweiten Querachse vorgebbar.

Es kann günstig sein, wenn zumindest der erste Balg eine geringere Steifigkeit als die zumindest erste Federvorrichtung aufweist.

Dadurch kann im Zustand einer geringen dynamischen Steifigkeit der Koppelvorrichtung ein großer Unterschied zwischen Gesamtsteifigkeiten aus statischen Steifigkeiten des ersten Balgs und aus dynamischen Steifigkeiten aufgrund eines beispielsweise in der ersten Fluidkammer strömenden Fluids einerseits und statischen Steifigkeiten aufgrund der ersten Federvorrichtung andererseits erreicht werden.

Montage- und Demontagevereinfachungen bezüglich der Koppelvorrichtung werden erzielt, wenn das Gehäuse ein erstes Gehäuseteil und ein zweites Gehäuseteil umfasst, welche lösbar miteinander verbunden sind.

Das erste Gehäuseteil und das zweite Gehäuseteil können beispielsweise miteinander verschraubt sein.

Ein erfolgversprechendes Anwendungsgebiet für die fluidische Koppelvorrichtung wird mit einem Fahrwerk für ein Schienenfahrzeug mit zumindest einer fluidischen Koppelvorrichtung erschlossen.

Ein solches Fahrwerk weist ein sicheres und verschleißarmes Fahrverhalten in Kurven und zugleich auch eine hohe Laufstabilität bei hohen Geschwindigkeiten (beispielsweise auf Geraden) auf.

Nachfolgend wird die Erfindung anhand eines Ausführungsbeispiels näher erläutert.

Es zeigt beispielhaft:

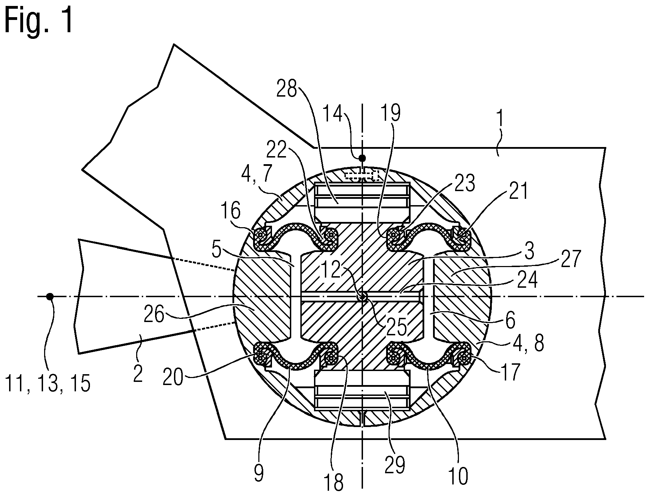

- Fig. 1:: Einen Seitenriss einer beispielhaften Ausführungsvariante einer erfindungsgemäßen fluidischen Koppelvorrichtung in geschnittener Darstellung, welche als Radsatzführungsbuchse einer ausschnittsweise gezeigten, beispielhaften Ausführungsvariante eines erfindungsgemäßen Fahrwerks eingesetzt ist.

Fig. 1 zeigt einen Seitenriss eines Ausschnitts aus einer beispielhaften Ausführungsvariante eines erfindungsgemäßen Fahrwerks für ein Schienenfahrzeug. Das Fahrwerk weist einen Fahrwerksrahmen 1 auf, welcher über einen Schwingarm 2 sowie über ein Radsatzlagergehäuse, ein Radsatzlager und über eine Primärfeder mit einem Radsatz gekoppelt ist. Das Radsatzlagergehäuse, das Radsatzlager, die Primärfeder sowie der Radsatz sind in Fig. 1 nicht gezeigt.

In eine zylindrische Öffnung des Fahrwerksrahmens 1 ist eine beispielhafte Ausführungsvariante einer erfindungsgemäßen fluidischen Koppelvorrichtung eingepresst und fungiert als Radsatzführungsbuchse. Die Radsatzführungsbuchse, der Schwingarm 2, das Radsatzlagergehäuse und das Radsatzlager sind Teile einer Radsatzführungsvorrichtung des Fahrwerks. Die Radsatzführungsvorrichtung führt den Radsatz auf einem in Fig. 1 nicht gezeigten Gleis, auf welchem das Fahrwerk beweglich angeordnet ist.

Erfindungsgemäß ist es auch denkbar, die Koppelvorrichtung z.B. als Radführungsbuchse einer Radführungsvorrichtung (beispielsweise in einem Losradfahrwerk oder Losradsatzfahrwerk) einzusetzen.

Die Koppelvorrichtung koppelt den Fahrwerksrahmen 1 mit dem Schwingarm 2 und umfasst einen metallischen Kern 3, ein den Kern 3 umgebendes metallisches Gehäuse 4 und eine erste Fluidkammer 5 sowie eine zweite Fluidkammer 6, welche zur Einstellung von Koppelsteifigkeiten der Koppelvorrichtung zwischen dem Fahrwerksrahmen 1 und dem Schwingarm 2 mit einem Hydraulikfluid versorgt sind.

Das Gehäuse 4 ist als zylindrische Buchse ausgeführt, welche in die zylindrische Öffnung des Fahrwerksrahmens 1 eingepresst ist, und umfasst ein erstes Gehäuseteil 7 und ein zweites Gehäuseteil 8. Das erste Gehäuseteil 7 und das zweite Gehäuseteil 8 sind halbzylindrisch ausgeführt und im Bereich ihrer Mantelflächen miteinander verschraubt, d.h. lösbar miteinander verbunden.

Der Kern 3 ist in einem in Fig. 1 nicht sichtbaren Bereich des Fahrwerks mit dem Schwingarm 2 verbunden. Bewegt sich der Schwingarm 2, so bewegt sich der Kern 3 mit dem Schwingarm 2 relativ zu dem Gehäuse 4 und dem Fahrwerksrahmen 1.

Die erste Fluidkammer 5 ist als erster Hohlraum zwischen dem Gehäuse 4 und dem Kern 3 gebildet, die zweite Fluidkammer 6 als zweiter Hohlraum zwischen dem Gehäuse 4 und dem Kern 3.

Die Koppelvorrichtung weist ferner einen verformbaren ersten Balg 9 und einen verformbaren zweiten Balg 10 auf, welche Luftfederbälgen für Sekundärfederanordnungen für Schienenfahrzeuge ähneln und in einem Elastomer mit Polyesterfasern ausgeführt sind. Der erste Balg 9 und der zweite Balg 10 sind somit als faserverstärkte Elastomerbälge ausgebildet. Erfindungsgemäß ist es auch vorstellbar, dass der erste Balg 9 und der zweite Balg 10 z.B. in einem Elastomer mit metallischen Fasern etc. ausgeführt sind.

Der erste Balg 9 und der zweite Balg 10 weisen jeweils eine Form ähnlich einem entlang seines Mittenkreises geschnittenen Torus auf und sind rotationssymmetrisch bezüglich einer gemeinsamen Balgachse 11, welche rechtwinklig zu einer in Fig. 1 projizierend erscheinenden Längsachse 12 der Koppelvorrichtung ausgerichtet ist und in einer ersten Querachse 13 der Koppelvorrichtung verläuft, ausgeführt. Die Längsachse 12 der Koppelvorrichtung ist parallel zu einer Fahrwerksquerachse des Fahrwerks ausgerichtet. Die erste Querachse 13 verläuft in einer Fahrwerkslängsachse 15 des Fahrwerks.

Die erste Fluidkammer 5 ist mittels des ersten Balgs 9, welcher mit dem Gehäuse 4 und mit dem Kern 3 verbunden ist, fluiddicht verschlossen.

Die zweite Fluidkammer 6 ist mittels des zweiten Balgs 10, welcher mit dem Gehäuse 4 und mit dem Kern 3 verbunden ist, fluiddicht verschlossen.

Der erste Balg 9 ist in eine erste Gehäuseausnehmung 16 des Gehäuses 4 und in eine erste Kernausnehmung 18 des Kerns 3 eingefügt und darin dichtend eingeklemmt, so dass der erste Balg 9 keine Gleitbewegungen relativ zu dem Kern 3 und zu dem Gehäuse 4 ausführen kann und dass das Hydraulikfluid nicht unbeabsichtigt aus der ersten Fluidkammer 5 ausdringen kann. Der zweite Balg 10 ist in eine zweite Gehäuseausnehmung 17 des Gehäuses 4 und in eine zweite Kernausnehmung 19 des Kerns 3 eingefügt und darin dichtend eingeklemmt, so dass der zweite Balg 10 keine Gleitbewegungen relativ zu dem Kern 3 und zu dem Gehäuse 4 ausführen kann und dass das Hydraulikfluid nicht unbeabsichtigt aus der zweiten Fluidkammer 6 ausdringen kann.

Mit dem Gehäuse 4 sind ein erster Klemmring 20 der Koppelvorrichtung und ein zweiter Klemmring 21 der Koppelvorrichtung verbunden, mit dem Kern 3 ein dritter Klemmring 22 der Koppelvorrichtung und ein vierter Klemmring 23 der Koppelvorrichtung. Der erste Klemmring 20 schmiegt sich im Bereich der ersten Gehäuseausnehmung 16 an den ersten Balg 9, der zweite Klemmring 21 schmiegt sich im Bereich der zweiten Gehäuseausnehmung 17 an den zweiten Balg 10, der dritte Klemmring 22 schmiegt sich im Bereich der ersten Kernausnehmung 18 an den ersten Balg 9 und der vierte Klemmring 23 schmiegt sich im Bereich der zweiten Kernausnehmung 19 an den zweiten Balg 10. Der erste Klemmring 20, der zweite Klemmring 21, der dritte Klemmring 22 und der vierte Klemmring 23 sind als Gegenformen zu Abschnitten des ersten Balgs 9 und des zweiten Balgs 10 ausgebildet, wodurch sie dichtend an dem ersten Balg 9 und dem zweiten Balg 10 anliegen.

Durch den Kern 3 ist eine erste Fluidleitung 24 geführt, welche die erste Fluidkammer 5 mit der zweiten Fluidkammer 6 verbindet und als Drossel fungiert.

Das Hydraulikfluid wird aus einem in Fig. 1 nicht dargestellten Tank, welcher mit dem Fahrwerk verbunden ist, über eine in Fig. 1 projizierend erscheinende zweite Fluidleitung 25 und über die erste Fluidleitung 24, welche mit der zweiten Fluidleitung 25 verbunden ist, der ersten Fluidkammer 5 und der zweiten Fluidkammer 6 zugeführt.

Das Gehäuse 4 weist einen in die erste Fluidkammer 5 hineinragenden ersten Anschlag 26 für den Kern 3 und einen in die zweite Fluidkammer 6 hineinragenden zweiten Anschlag 27 für den Kern 3 auf.

Der erste Anschlag 26 und der zweite Anschlag 27 sind rotationssymmetrisch bezüglich der Balgachse 11 ausgeführt. Eine Kernlängsachse des Kerns 3 verläuft in der Balgachse 11. Der Kern 3 ist dem ersten Anschlag 26 und dem zweiten Anschlag 27 zwischengeordnet.

Der erste Anschlag 26 und der zweite Anschlag 27 begrenzen Relativbewegungen zwischen dem Kern 3 und dem Gehäuse 4.

Das Gehäuse 4 und der erste Anschlag 26 sowie der zweite Anschlag 27 sind einstückig ausgeführt. Erfindungsgemäß ist es jedoch auch denkbar, dass der erste Anschlag 26 und der zweite Anschlag 27 mit dem Gehäuse 4 verbunden sind (beispielsweise durch Schweißverbindungen).

Die Koppelvorrichtung umfasst weiterhin eine erste Federvorrichtung 28 und eine zweite Federvorrichtung 29, welche als Schichtfedern ausgebildet und zwischen dem Gehäuse 4 und dem Kern 3 angeordnet sind.

Die erste Fluidkammer 5 und die zweite Fluidkammer 6 sind auf der ersten Querachse 13 angeordnet, d.h. die erste Querachse 13 verläuft durch die erste Fluidkammer 5 und die zweite Fluidkammer 6.

Die erste Federvorrichtung 28 und die zweite Federvorrichtung 29 sind auf einer zweiten Querachse 14 der Koppelvorrichtung angeordnet, d.h. die zweite Querachse 14 verläuft durch die erste Federvorrichtung 28 und die zweite Federvorrichtung 29. Federlängsachsen der ersten Federvorrichtung 28 und der zweiten Federvorrichtung 29 verlaufen in der zweiten Querachse 14.

Die zweite Querachse 14 ist parallel zu einer Fahrwerkshochachse des Fahrwerks und rechtwinklig zu der ersten Querachse 13 ausgerichtet.

Der erste Balg 9 und der zweite Balg 10 weisen eine geringere statische Steifigkeit, d.h. eine geringere Bauteilsteifigkeit auf als die erste Federvorrichtung 28 und die zweite Federvorrichtung 29.

In Richtung der ersten Querachse 13 und der Fahrwerkslängsachse 15 ist eine frequenzabhängige, dynamische Radsatzführungssteifigkeit aufgrund von Strömungsvorgängen des Hydraulikfluids in der Koppelvorrichtung dominierend, in Richtung der zweiten Querachse 14 und der Fahrwerkshochachse eine statische Radsatzführungssteifigkeit aufgrund der ersten Federvorrichtung 28 und der zweiten Federvorrichtung 29.

### Liste der Bezeichnungen

- 1: Fahrwerksrahmen
- 2: Schwingarm
- 3: Kern
- 4: Gehäuse
- 5: Erste Fluidkammer
- 6: Zweite Fluidkammer
- 7: Erstes Gehäuseteil
- 8: Zweites Gehäuseteil
- 9: Erster Balg
- 10: Zweiter Balg
- 11: Balgachse
- 12: Längsachse
- 13: Erste Querachse
- 14: Zweite Querachse
- 15: Fahrwerkslängsachse
- 16: Erste Gehäuseausnehmung
- 17: Zweite Gehäuseausnehmung
- 18: Erste Kernausnehmung
- 19: Zweite Kernausnehmung
- 20: Erster Klemmring
- 21: Zweiter Klemmring
- 22: Dritter Klemmring
- 23: Vierter Klemmring
- 24: Erste Fluidleitung
- 25: Zweite Fluidleitung
- 26: Erster Anschlag
- 27: Zweiter Anschlag
- 28: Erste Federvorrichtung
- 29: Zweite Federvorrichtung

## Patentansprüche

1. Fluidische Koppelvorrichtung zur Kopplung von Bauteilen, insbesondere für eine Radführungsvorrichtung oder Radsatzführungsvorrichtung für ein Fahrwerk für ein Schienenfahrzeug, mit einem Kern (3), mit einem den Kern (3) umgebenden Gehäuse (4) und mit zumindest einer ersten Fluidkammer (5), welche zur Einstellung von Koppelsteifigkeiten der Koppelvorrichtung mit Fluid versorgbar ist, wobei die zumindest erste Fluidkammer (5) als erster Hohlraum zwischen dem Gehäuse (4) und dem Kern (3) gebildet ist, **dadurch gekennzeichnet, dass** die zumindest erste Fluidkammer (5) mittels eines verformbaren ersten Balgs (9), welcher mit dem Gehäuse (4) und mit dem Kern (3) verbunden ist, fluiddicht verschlossen ist, wobei zumindest der erste Balg (9) rotationssymmetrisch bezüglich einer Balgachse (11), welche rechtwinklig zu einer Längsachse (12) der Koppelvorrichtung ausgerichtet ist, ausgeführt ist.

2. Fluidische Koppelvorrichtung nach Anspruch 1, **dadurch gekennzeichnet, dass** eine zweite Fluidkammer (6) als zweiter Hohlraum zwischen dem Gehäuse (4) und dem Kern (3) gebildet und mittels eines verformbaren zweiten Balgs (10), welcher mit dem Gehäuse (4) und mit dem Kern (3) verbunden ist, fluiddicht verschlossen ist, wobei durch den Kern (3) eine erste Fluidleitung (24) geführt ist, welche die erste Fluidkammer (5) mit der zweiten Fluidkammer (6) verbindet.

3. Fluidische Koppelvorrichtung nach Anspruch 1 oder 2, **dadurch gekennzeichnet, dass** zumindest der erste Balg (9) als faserverstärkter Elastomerbalg ausgebildet ist.

4. Fluidische Koppelvorrichtung nach einem der Ansprüche 1 bis 3, **dadurch gekennzeichnet, dass** zumindest der erste Balg (9) in eine erste Gehäuseausnehmung (16) des Gehäuses (4) und in eine erste Kernausnehmung (18) des Kerns (3) eingefügt ist.

5. Fluidische Koppelvorrichtung nach einem der Ansprüche 1 bis 4, **dadurch gekennzeichnet, dass** das Gehäuse (4) zumindest einen in die zumindest erste Fluidkammer (5) hineinragenden ersten Anschlag (26) für den Kern (3) aufweist oder mit dem Gehäuse (4) zumindest ein in die zumindest erste Fluidkammer (5) hineinragender erster Anschlag (26) für den Kern (3) verbunden ist.

6. Fluidische Koppelvorrichtung nach einem der Ansprüche 1 bis 5, **dadurch gekennzeichnet, dass** zwischen dem Gehäuse (4) und dem Kern (3) zumindest eine erste Federvorrichtung (28) angeordnet ist.

7. Fluidische Koppelvorrichtung nach Anspruch 6, **dadurch gekennzeichnet, dass** die zumindest erste Federvorrichtung (28) als Schichtfeder ausgebildet ist.

8. Fluidische Koppelvorrichtung nach Anspruch 6 oder 7, **dadurch gekennzeichnet, dass** die zumindest erste Fluidkammer (5) auf einer ersten Querachse (13) der Koppelvorrichtung angeordnet ist und die zumindest erste Federvorrichtung (28) auf einer zweiten Querachse (14) der Koppelvorrichtung angeordnet ist, wobei die erste Querachse (13) und die zweite Querachse (14) rechtwinklig zueinander ausgerichtet sind.

9. Fluidische Koppelvorrichtung nach einem der Ansprüche 6 bis 8, **dadurch gekennzeichnet, dass** zumindest der erste Balg (9) eine geringere Steifigkeit als die zumindest erste Federvorrichtung (28) aufweist.

10. Fluidische Koppelvorrichtung nach einem der Ansprüche 1 bis 9, **dadurch gekennzeichnet, dass** das Gehäuse (4) ein erstes Gehäuseteil (7) und ein zweites Gehäuseteil (8) umfasst, welche lösbar miteinander verbunden sind.

11. Fluidische Koppelvorrichtung nach einem der Ansprüche 1 bis 10, **dadurch gekennzeichnet, dass** das Gehäuse (4) buchsenförmig ausgebildet ist.

12. Fluidische Koppelvorrichtung nach einem der Ansprüche 1 bis 11, **dadurch gekennzeichnet, dass** die zumindest erste Fluidkammer (5) mit einem Hydraulikfluid versorgbar ist.

13. Fahrwerk für ein Schienenfahrzeug mit zumindest einer fluidischen Koppelvorrichtung nach einem der Ansprüche 1 bis 12.
